(19) Europäisches Patentamt
European Patent Office
Office européen des brevets

(11) **EP 4 657 461 A1**

(12) **EUROPEAN PATENT APPLICATION**

(43) Date of publication:
**03.12.2025 Bulletin 2025/49**

(21) Application number: **24178121.0**

(22) Date of filing: **26.05.2024**

(51) International Patent Classification (IPC):
**G21B 1/05** *(2006.01)* **G21B 1/11** *(2006.01)*
**H05H 1/14** *(2006.01)*

(52) Cooperative Patent Classification (CPC):
**G21B 1/05; G21B 1/11; H05H 1/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Novatron Fusion Group AB**
**167 33 Bromma (SE)**

(72) Inventors:
• **Jäderberg, Jan**
**16347 Spånga (SE)**
• **Bendtz, Katarina**
**11548 Stockholm (SE)**

(74) Representative: **AWA Sweden AB**
**Box 5117**
**200 71 Malmö (SE)**

(54) **MAGNETIC MIRROR MACHINE**

(57)     A magnetic mirror machine (200) comprises a first magnet system (1) comprising a first plurality of concentrically arranged circular-loop coils (11, 12), comprising a first coil (11) arranged to carry a current in a first direction; and a second coil (12) arranged to carry a current in a second direction opposite to said first direction; and a second magnet system (2) comprising a second plurality of concentrically arranged circular-loop coils (21, 22), arranged with mirror symmetry with respect to said first magnet system relative to a symmetry plane (P) located between said first magnet system (1) and said second magnet system (2), said first magnet system (1) and said second magnet system (2) being arranged as to create an annular plasma confinement area (206) at said symmetry plane (P) with a magnetic field normal to said symmetry plane (P) at said symmetry plane (P), said magnetic mirror machine further comprising a tandem magnet system (4, 4'), comprising a first tandem coil (41) located longitudinally outside said first coil (11, 21) of one of said first magnet system (1) or said second magnet system (2) and arranged to carry a current in said second direction, and a second tandem coil (42) located longitudinally outside said second coil (12, 22) of said one of said first magnet system (1) or said second magnet system (2) and arranged to carry a current in said first direction.

Fig. 1

EP 4 657 461 A1

## Description

Field of technology

The present disclosure relates to a magnetic mirror machine, which may be used as a plasma confinement device, and to a method for plasma confinement.

Background

Great efforts are being made to design a reactor for controlled fusion on earth. The most promising fusion process is between the hydrogen isotopes deuterium ($^2$H) and tritium ($^3$H). In the deuterium-tritium fusion presses, a $^4$He alpha particle, having a kinetic energy of about 3.5 MeV and a neutron, having a kinetic energy of about 14.1 MeV, are created.

For fusion to occur, nuclei must be in the form of a plasma having a temperature in the order of 150 million kelvins. Providing confinement for such a plasma remains a major challenge.

Plasma confinement involves confining the charged particles of the plasma. There are several different known magnetic configurations for plasma confinement. One class of such configurations are magnetic mirror machines.

PCT/EP2020/081762, hereby incorporated by reference in its entirety, discloses one such configuration.

Summary

It is an object of the present disclosure to provide an improved magnetic mirror machine, in particular for use for plasma confinement, and in particular for use a fusion reactor.

To this end, according to a first aspect, there is provided a magnetic mirror machine, comprising a first magnet system comprising a first plurality of concentrically arranged circular-loop coils, comprising a first coil arranged to carry a current in a first direction; and a second coil arranged to carry a current in a second direction opposite to said first direction; and a second magnet system comprising a second plurality of concentrically arranged circular-loop coils, arranged with mirror symmetry with respect to said first magnet system relative to a symmetry plane, said symmetry plane being located between said first magnet system and said second magnet system, said first magnet system and said second magnet system being arranged as to create an annular plasma confinement area at said symmetry plane with a magnetic field normal to said symmetry plane at said symmetry plane, said plasma confinement device further comprising a tandem magnet system, comprising a first tandem coil located longitudinally outside said first coil of one of said first magnet system or said second magnet system and arranged to carry a current in said second direction, and a second tandem coil located longitudinally outside said second coil of said one of said first magnet system or said second magnet system and arranged to carry a current in said first direction.

As an annular plasma confinement area should be understood a rotationally symmetric region in which the charged particles of the plasma are confined, having, for example, a ring-like, donut-like, or cylindrical-mantle-like topology, or more elaborate shapes.

As a longitudinal direction should be understood a direction along the magnetic field lines of the magnetic mirror machine. As a first feature being located longitudinally outside a second feature should be understood as the first feature being located away from the center of the magnetic mirror machine, following the magnetic field lines.

The magnetic mirror machine may find use as a plasma confinement device, in particular as part of a fusion reactor.

Through the present arrangement with the first tandem coil and the second tandem coil arranged to carry currents as per the above, the tandem magnet system may provide an additional cell of the plasma confinement area, located longitudinally outside the first magnet system and the second magnet system. As part of the present inventive concept, it has been found that for regions at low radius, corresponding to a boundary of the plasma confinement area located radially inwards, the additional cell may provide field lines with concave curvature, as associated with magneto-hydrodynamic stability of the confined plasma, compensating for convex curvature in the main cell. Thus, the present inventive concept may provide magnetic field conditions that may further improve the magnetohydrodynamic stability properties of the plasma magnetic mirror machine as compared to the arrangement disclosed in PCT/EP2020/081762.

The tandem magnet system may be a first tandem magnet system and the magnetic mirror machine may further comprises a second tandem magnet system located adjacent to the other of said first magnet system or said second magnet system than said first tandem magnet system.

This may further again allow for improving the magnetohydrodynamic stability properties of the plasma magnetic mirror machine.

The second tandem system may be arranged with mirror symmetry with respect to the first tandem magnet system relative to the symmetry plane.

The first plurality of concentrically arranged coils may, for example, be identically designed to the second plurality of concentrically arranged coils. This is a particularly simple way of achieving the desired magnetic field configuration.

The magnetic mirror machine may further comprise a third magnet system arranged radially outside the plasma confinement area, the third magnet system comprising at least one circular-loop coil.

Hereby, it is possible to arrange for a strictly radially increasing magnetic field, which may be beneficial for the stability of the confined plasma, further improving on a conventional magnetic mirror.

Further, the arrangement with a third magnet system may allow for arranging a concave magnetic field in the whole plasma confinement area, which may be beneficial for the stability of the confined plasma.

Thus, a rotationally symmetric open-field-line magnetic mirror machine may be provided that has a high mirror ratio and has properties beneficial for plasma stability.

The third magnet system may comprise a first coil arranged on a same side of the symmetry plane at the first magnet system and a second coil arranged on an opposite side of the symmetry plane, wherein the second coil is arranged with mirror symmetry relative to the first coil.

The magnetic mirror machine according to the first aspect may be used for confining a plasma.

The magnetic mirror machine according to the first aspect may be used in a fusion reactor.

According to a second aspect, there is provided a method of plasma confinement, comprising in a first magnet system comprising a first plurality of concentrically arranged circular-loop coils, a first coil carrying a current in a first direction and a second coil carrying a current in a second direction opposite to said first direction; and a second magnet system comprising a second plurality of concentrically arranged circular-loop coils carrying currents with mirror symmetry with respect to said first magnet system relative to a symmetry plane, said symmetry plane being located between said first magnet system and said second magnet system, creating an annular plasma confinement area at said symmetry plane with a magnetic field normal to said symmetry plane, a first tandem coil, located longitudinally outside said first coil of one of said first magnet system or said second magnet system, carrying a current in said second direction, and a second tandem coil, located longitudinally outside said second coil of said one of said first magnet system or said second magnet system, carrying a current in said first direction.

Embodiments and advantages of this second aspect may generally be similar to or the same as those of the first embodiment.

Brief description of the drawings

The above, as well as additional objects, features and advantages of the present inventive concept, will be better understood through the following illustrative and non-limiting detailed description of preferred embodiments, with reference to the appended drawings, where the same reference numerals will be used for similar elements, wherein:

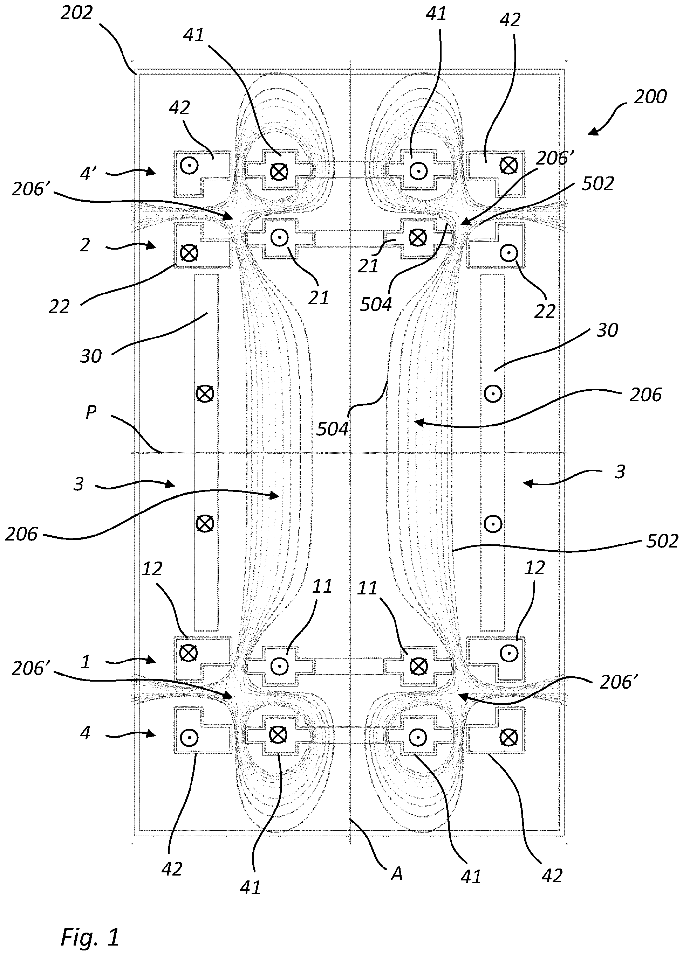

Fig 1 is a planar cross-sectional view of a magnetic mirror machine.

Detailed description

Throughout this disclosure references will be made to figures showing simulated magnetic field lines, i.e., equal magnetic potential lines.

Throughout this disclosure, reference may be made to coordinate systems and directions relative to the axis A and the symmetry plane P as shown in Fig. 1. In particular, coordinates and directions may be described with reference to a cylindrical coordinate system or to a cartesian coordinate system, each having as origin the intersection of the symmetry axis A and the symmetry plane P.

The cartesian coordinate system, with coordinates referred to as "x, y, z", "X, Y, Z", "A, B, C" or the like, should be understood as having the first two coordinate axes "x, y", "X, Y", "A, B", or the like, lying in the symmetry plane P and the third coordinate axis "z", "Z", "C", or the like, extending in a positive direction upwards from the origin along the symmetry axis A.

If no units for spatial coordinates are disclosed, units of meters or degrees are implied. If no unit of time is disclosed, a unit of seconds is implied.

The cylindrical coordinate system, should be understood as having a radial direction and coordinate ("R", "r", or the like) extending from the origin at the intersection of the symmetry axis A and the symmetry plane P, an azimuth direction and coordinate ("phi", "Phi", or the like) measured as a rotational angle around the symmetry axis A, and an axial direction and coordinate ("z", "Z", "C" or the like) extending in a positive direction from the origin upwards along the symmetry axis A. Positive direction for the azimuth direction is according to the right-hand rule with respect to the positive axial direction.

As is generally known, plasma confinement devices may be based either on open magnetic field lines or closed field lines.

A closed-field line configuration may, for example, be realized with a toroidal magnetic field. An example of such a device is a tokamak.

Open-field-line plasma confinement devices, as known per se in the prior art, may operate by a principle of magnetic mirroring, wherein the charged particles of the plasma are reflected in areas of increasing magnetic flux density in peripheral regions of the confinement area.

As in the present case, a magnetic mirror machine may be a linear magnetic mirror machine with a first mirror area located at the first end of the magnetic mirror machine and a second mirror area located at the second end of the linear magnetic mirror machine.

While recognized to be able to provide plasma confinement, open field-line plasma confinement devices will always have leakage of charge particles with velocity vectors sufficiently aligned with the magnetic field lines. More specifically, the mirror effect will occur for all particles within a range of angles of approach outside a loss cone defined by the helix spiral pitch angle of the charged particle's gyration spin around the magnetic field lines.

The extent of the loss cone is determined by the mirror ratio $r_{mirror}$, defined as the ratio between maximum $B_{max}$ and minimum $B_{min}$ magnetic flux density following a magnetic field line:

$$r_{\mathrm{mirror}} = \frac{B_{\max}}{B_{min}}.$$

The angle defining the loss cone is then:

$$\alpha_{\mathrm{cone}} = \arccos \frac{1}{\sqrt{r_{\mathrm{mirror}}}}.$$

Thus, it can be seen that high mirror ratio will lead to a small loss cone, so that only the particle having velocities the most aligned with the field lines will escape. Conversely, a low mirror ratio will lead to a larger loss cone.

A property, known from literature, of the magnetic field lines of a plasma confinement device, associated with magneto-hydrodynamic stability of the confined plasma, is a concave magnetic field, i.e., a magnetic field having concave magnetic field lines, as seen from outside the plasma confinement area and/or the confined plasma.

A related property known from literature and associated with magneto-hydrodynamic stability is an inequality criterium based on the so-called interchange integral, originally attributable to Rosenbluth and Longmire (Stability of plasmas confined by magnetic fields, Annals of Physics 1(2), 120-140 (1957), https://doi.org/10.1016/0003-4916(57)90055-6), wherein the criterium may be formulated

$$\int \frac{p_{tot}}{RrB^2} dl > 0$$

where the integral is performed along a magnetic field line, $p_{tot}$ is a total plasma pressure defined as a sum $p_{tot} = p_{para} + p_{perp}$ of the plasma pressure parallel to the magnetic field line $p_{para}$ and the plasma pressure perpendicular to the magnetic field line $p_{perp}$, $r$ is a radial coordinate in a cylindrical coordinate system, or, alternatively, the distance from a symmetry axis A in a cylindrically symmetric system, B is the magnetic flux density along the magnetic field line, and R is the curvature radius of the magnetic field line along the magnetic field line, wherein the curvature radius R of the magnetic field line is counted as positive if the center of curvature lies outside the plasma and as negative if the center of curvature lies inside the plasma.

This result stems from the fact that an interchange instability originates from the event of two adjacent so called flux tubes, the 'tube' shaped volume of plasma surrounding a specific field line, along with the field contained within it, changing places. For this event to be energetically unfavorable, the integral above needs to be larger than 0.

Rosenbluth and Longmire formulated the above criterium based on the interchange integral in the context of a plasma having a compact geometry, meaning the plasma confinement area only having an outer boundary in the radial direction, such as a spherical or cylindrical plasma.

As part of the present inventive concept, it has been realized that what is decisive for stability according to the interchange integral is the direction of the curvature vector of the magnetic field line in relation to the plasma pressure gradient of the plasma, as representable as the sign of the scalar product of the curvature vector of the magnetic field line in relation and the plasma pressure gradient.

In the case of the interchange integral as formulated by Rosenbluth and Longmire, at a radially outer boundary of the plasma, having a center of curvature of the magnetic field line outside of the plasma, i.e., radially outside of the plasma, as associated with a positive R and therefore positive integrand in the interchange integral, implies a curvature vector of the magnetic field line with a direction opposite to the plasma pressure gradient, since it is assumed that the plasma pressure gradient is pointed radially inwards.

At a radially inner boundary of the plasma, the plasma pressure gradient points radially outwards, meaning that having a center of curvature of the magnetic field line outside of the plasma, i.e., now radially inside of the plasma, as associated with a positive R and therefore a positive integrand in the interchange integral, again implies a curvature vector of the magnetic field line with a direction opposite to the plasma pressure gradient.

Thus, as part of the present inventive concept, it has been realized that the above criterium based on the interchange integral applies equally well to an annular plasma and/or an annular plasma confinement area, at both a radially outer and a radially inner boundary of the plasma.

Fig. 1 is a planar cross-sectional view of a magnetic mirror machine 200. The magnetic mirror machine 200 may operate as a plasma confinement device and thus may be used for plasma confinement.

The magnetic mirror machine 200 may comprise customary shielding and/or a plasma vessel 202, as known in the art. The shielding may comprise neutron shielding, as known per se.

The magnetic mirror machine 200 may be comprised in a fusion reactor and/or used in a fusion reactor.

In the example of Fig. 1, the magnetic mirror machine 200 is rotationally symmetric, or at least substantially rotationally symmetric, around a symmetry axis A lying in the plane of Fig. 1.

As will be elaborated further upon below, the magnetic mirror machine 200 comprises a plurality of electromagnetic coils comprised in a number of magnet systems. Each electromagnetic coil may be arranged in a circular loop, as in Fig. 1, and may be arranged for carrying a respective direct current, the direction of which being conventionally indicated using respective a dot or cross in Fig. 1, wherein a dot indicates a conventional current directed out of the cross-sectional plane of the drawing and a cross indicates a conventional current directed into the cross-sectional plane of the drawing. As readily appreciated by the skilled person, embodiments with all currents reversed as compared to what is disclosed in Fig. 1 are equally possible. Thus, Fig. 1 shows coil direct current directions during operation of the first magnet system and the second magnet system as used in a plasma confinement device.

The magnetic mirror machine 200 comprises a first magnet system 1 and a second magnet system 2, with Fig. 1 showing a cross sectional view through the first magnet system 1 and the second magnet system 2 in a cross-sectional plane through the symmetry axis A.

The first magnet system 1 comprises a first plurality of concentrically arranged circular-loop coils arranged around a symmetry axis A, for example, as shown a first, inner coil 11 and a second, outer, coil 12, arranged concentrically to and radially outside the inner coil 11.

Further, the magnetic mirror machine 200 comprises a second magnet system 2 comprising a second plurality of circular-loop coils, likewise concentrically arranged around the axis A, but vertically displaced relative to the first magnet system. The second magnet system may, for example, as shown, comprise a first, inner coil 21 and a second, outer, coil 22, arranged concentrically to and radially outside the inner coil 21.

The coils 21, 22 of the second magnet system 2 are arranged with mirror symmetry with respect to the coils 11, 12 of first magnet system 1 relative to a symmetry plane P, which is at equal distance to each of the first magnet system 1 and to the second magnet system 2.

Still with reference to Fig. 1, the first plurality of concentrically arranged coils 11, 12 of the first magnet system 1 may, as shown, be identically designed to the second plurality of concentrically arranged coils 21, 22 of the second magnet system 2, respecting the mirror symmetry.

In the first magnet system 1, the current of the inner coil 11 is configured to run in a direction into the cross-sectional plane (marked with a cross) on the right side of Fig. 1 and out of the cross-sectional plane (marked with a dotted circle) in the left side of Fig. 1, i.e., counter-clockwise a seen from above the first magnet system. Conversely, the current of the outer coil 12 is configured to run in a direction out of the cross-sectional plane (marked with a dotted circle) on the right side of Fig. 1 and into the cross-sectional plane (marked with a cross circle) in the left side of Fig. 1, i.e., clockwise a seen from above the first magnet system.

Thus, the first plurality of concentrically arranged circular-loop coils comprises a first coil 11 arranged to carry a current in a first direction, and a second coil 12 arranged to carry a current in a second direction opposite to the first direction.

Throughout this disclosure, for example, the respective absolute value of the respective currents carried by each disclosed coil may be equal. Alternatively, two or more coils may carry currents having unequal absolute values.

Similarly, respecting the mirror symmetry with respect to the symmetry plane P, in the second magnet system 2, the current of the inner coil 21 is configured to run in a direction into the cross-sectional plane (marked with a cross) on the right side of Fig. 1 and out of the cross-sectional plane (marked with a dotted circle) in the left side of Fig. 1, i.e., counter-clockwise a seen from above the first magnet system and the current of the outer coil 22 is configured to run in a direction out of the cross-sectional plane (marked with a dotted circle) on the right side of Fig. 1 and into the cross-sectional plane (marked with a cross circle) in the left side of Fig. 1, i.e., clockwise a seen from above the first magnet system.

Thus, the currents of the second magnet system 2, with first magnet system 1 and the second magnet system 2 in operation, are arranged with mirror symmetry with respect to the first magnet system relative to the symmetry plane P located between the first magnet system 1 and the second magnet system 2.

Thus, expressed in other words, a plasma confinement device may comprise two disc-shaped magnet systems 1, 2 facing each other in axial direction, forming a space 206 where a plasma may be confined. Each magnet system 1, 2 has at least two coils 11, 12, 21, 22 where the current direction and magnitude create a normal magnetic field boundary condition at the symmetry plane P.

Further, as shown in Fig. 1, the magnetic mirror machine 200 may comprise a third magnet system 3, which may be arranged radially outside, with respect to the axis A, the plasma confinement area 206. Further, again as shown in Fig. 1, the third magnet system 3 may be located radially outside, with respect to the axis A, the first magnet system 1 and the second magnet system 2.

The third magnet system 3 may comprise at least one circular-loop coil, for example, as shown, single, cylindrical coil 30. Alternatively (not shown), for example, the third magnet system may comprise a first circular-coil loop coil arranged on the same side of the symmetry plane P as the first magnet system and a second circular-coil loop arranged on the opposite side of the symmetry plane P, wherein the second coil is arranged with mirror symmetry relative to the first coil.

In particular, each coil of the third magnet system, such as the coil 3, as shown in Fig. 1, has a current configured to run, with the magnet system in operation, in a direction into the cross-sectional plane (marked with a cross) on the left side of Fig. 1 and out of the cross-sectional plane (marked with a dotted circle) on the right side of Fig. 1, i.e., clockwise as seen from above the first magnet system.

Further, the magnetic mirror machine comprises a first tandem magnet system 4 located longitudinally outside, with respect to the axis A, and adjacent to the first magnet system 1, and, optionally, a second tandem magnet system 4' located longitudinally outside and adjacent to the second magnet system 2.

Each of the first tandem magnet system 4' and the second tandem magnet system 4 comprises a first tandem coil 41 located longitudinally outside the first coil 11, 21 of, respectively, the first magnet system 1 and the second magnet system 2. As shown through dots and crosses, each first tandem coil 41 is arranged to carry a current in the second direction, i.e., the same direction of current as that of the outer coil 22 of the second magnet system and of the outer coil 12 of the first magnet system, and opposite to that of the inner coil 21 of the second magnet system 2 and the inner coil 11 of the first magnet system 1.

Further, each of the first tandem magnet system 4' and the second tandem magnet system 4 comprises a second tandem coil 42 located longitudinally outside the second coil 22, 12 of respectively, the first magnet system 1 and the second magnet system 2. As shown through dots and crosses, each second tandem coil 42 is arranged to carry a current in the first direction, i.e., opposite to the direction of current of the outer coil 22 of the second magnet system and of the outer coil 12 of the first magnet system, and in the same direction of current to that of the inner coil 21 of the second magnet system 2 and the inner coil 11 of the first magnet system 1.

Thus, as can be seen in Fig. 1, each of the first tandem magnet system 4 and the second tandem magnet system 4' comprises a plurality of concentrically arranged circular-loop coils arranged around the symmetry axis A, in the form of the first, inner coil 41 and the second, outer coil 42, so that the second coil 42 is located radially outside the first coil 41.

Alternatively speaking, the first coil 41 and the second coil 42 are co-disposed co-axially with respect to the symmetry axis A.

As evident from Fig. 1, the second tandem system 4' may be arranged with mirror symmetry with respect to the first tandem magnet system 4 relative to the symmetry plane P.

In the presence of a tandem magnet system 4, 4', the plasma confinement area 206 extends into the space 206' between, respectively, the first magnet system 1 and the first tandem magnet system 4, and the second magnet system 2 and the second tandem magnet system 4'. The respective spaces 206' may be regarded as additional cells of the magnetic mirror machine 200, located longitudinally outside, respectively, the first magnet system 1 and the second magnet system 2.

As the magnetic field lines of Fig. 1 show, at the symmetry plane P, the mirror-symmetric configuration of currents in the respective coils may create, at the symmetry plane P, a magnetic field normal to the symmetry plane P. An annular, typically toroid-shaped, plasma confinement area 206 is formed centered at the symmetry plane P, as will be explained further in the following. The disclosed magnet system configurations makes the magnetic field normal to the symmetry plane P throughout the symmetry plane P, as is evident by the magnetic field lines crossing the symmetry plane P at right angles.

Due to the rotational symmetry of disclosed magnet systems, the magnetic field configuration is also rotationally symmetric, so that to that Fig. 1 is representative for any such cross-sectional plane and therefore for the whole field configuration. In particular, the magnetic field has no toroidal component, i.e., in a direction pointing into or out of the cross-sectional plane of Fig. 1, which is the azimuth direction referred to above. In other words, the magnetic field vectors lie in the cross-sectional plane for any such cross-sectional plane through the axis A.

Fig. 1 shows magnetic field lines resulting from the mirror-symmetric configuration of currents in the first magnet system 1, the second magnet system 2, and the tandem magnet systems 4, 4' described above. The resulting magnetic field configuration results in the annular confinement area 206, in which ions of a plasma may be confined. The plasma confinement area is radially restricted between an inner radius and an outer radius, as confirmed by simulations. Plasma ions confined in the plasma confinement device, in the plasma confinement area 206 at the symmetry plane P, will perform a circular gyration motion in that plane due to the magnetic field perpendicular to that plane. As mentioned, no toroidal field is present. Given the absence of a toroidal magnetic field component, therefore, there will be no axial Lorentz force on the ions at the symmetry plane P. Moving away from the symmetry plane in axial direction, along a field line, the Lorentz force may push the ion back towards the symmetry plane, confining the ion at the symmetry plane.

Through an appropriate choice of the geometries of the of the coils of the first magnet system 1, the second magnet system 2, and the tandem magnet systems 4, 4', and the currents carried therein, it is possible to achieve a field configuration displaying a region of relatively low magnetic flux density near the symmetry plane P and a region of relatively high magnetic flux density extending into and past the space 206' between, respectively, the first magnet system 1 and the tandem magnet system 4, and the second magnet system 2 and the tandem magnet system 4', creating the confinement area 206 for charged particles, based on the principle of magnetic reflection.

The properties of magnetic field lines in the magnetic mirror machine 200 will now be explained in view of the interchange integral discussed above, viz., in view of a magnetic field line 502 close to an outer radial edge of the plasma confinement area 206 and a magnetic field line 504 close to a radially inner edge of the plasma confinement area 206.

As can be seen in Fig. 1, the magnetic field line 502 has a consistently concave curvature as seen from radially outside the plasma and the plasma confinement area 206, including the part of the plasma confinement area 206 located in the space 206' between, respectively, the first magnet system 1 and the tandem magnet system 4, and the second magnet system 2 and the tandem magnet system 4'. This implies that the center of curvature is located outside of the plasma, and therefore a positive R, and therefore a consistently positive integrand in the interchange integral (cf. above), leading to the criterium of the interchange integral being positive being trivially fulfilled.

The magnetic field line 504 has, in an area located close to the symmetry plane P, a convex curvature as seen from radially inside the plasma and the plasma confinement area 206. This implies that the center of curvature is located inside the plasma, and therefore a negative R, and therefore a negative integrand in the interchange integral, thus contributing towards non-stability in the total interchange integral along the magnetic field line 504.

However, in the parts of the plasma confinement area 206 located in the space 206' between, respectively, the first magnet system 1 and the tandem magnet system 4, and the second magnet system 2 and the tandem magnet system 4', the magnetic field line 504 has a concave curvature as seen from radially inside the plasma and the plasma confinement area 206. This implies that the center of curvature is located outside the plasma, and therefore a positive R, and therefore a positive integrand in the interchange integral, thus contributing towards stability in the total interchange integral along the magnetic field line 504.

Thus, as part of the present inventive concept, it has been realized that the presence of a tandem magnet system 4, 4' allows for the skilled person to arrange for a magnetic field curvature that may, for a radially inward boundary of the plasma confinement area 206, give magnetic field lines in the area 206' a concave curvature that may compensate for a convex curvature in a longitudinally central area of the plasma confinement area close to the symmetry plane P, which may lead to an overall positive interchange integral, satisfying the criterion of Rosenbluth and Longmire, thus allowing for a stable plasma at a radially inward boundary of the plasma confinement area 206.

The plasma confinement properties of the magnetic mirror machine 200 were validated in simulation. Further, using typical plasma pressures from the simulation, the interchange integral was calculated and the above findings in relation to the interchange integral confirmed.

Each electromagnetic coil throughout this disclosure may be manufactured and arranged using methods, materials, compounds, and the like, known per se in the art, for example using, copper, or some other suitable metal as conductor.

Alternatively, each electromagnetic coil may be a superconductor coil. Suitable superconductor materials may include YBCO, Bi2223, 2212, Nb3SN, NbTi, MgB2, and/or ReBCO. The electromagnetic coils throughout this disclosure may, for example, be so-called high-temperature superconductor coils.

As known in the art, a superconductor coil may comprise internal structure. For example, within each superconductor coil, superconducting material may be arranged in filaments, strands, cables, ropes, or the like using methods generally known in the art. The cross-section of the coil, as referred to throughout this disclosure, should then be understood as an enclosing envelope of this internal structure.

For example, the superconductor coils throughout this disclosure may be manufactured and arranged using methods, materials, compounds, and the like, as detailed in D Uglietti: A review of commercial high temperature superconducting materials for large magnets: from wires and tapes to cables and conductors, Supercond. Sci. Technol. 32 (2019) 053001 (29pp), https://doi.org/10.1088/1361-6668/ab06a2, incorporated herein by reference.

Further, the superconductor coils may be cooled using methods generally known per se in the art.

Physical dimensions of the magnetic mirror machine 200 may depend on many parameters such as engineering current density in the magnetic coils, the degree of confinement of alpha particles, the desired plasma volume, etc., as contemplatable by the skilled person.

Typical dimensions may be as follows. An outer radius of the coils 42, 12, 22, 42 may be about 1.5 m. The axial distance between the bottom of coils 41, 42 of the first tandem magnet system 4 and the top of coils 41, 42 of the second tandem magnet system 4' may be about 2.8 m.

The magnetic field line 502 may cross the symmetry plane P at a radius of about 0.9 m. The magnetic field line 504 may cross the symmetry pane P at a radius of about 0.5 m.

The inventive concept has mainly been described above with reference to example embodiments. However, as is readily appreciated by a person skilled in the art, other embodiments than the ones disclosed above are equally possible within the scope of the inventive concept, as defined by the appended patent claims.

## Claims

1. A magnetic mirror machine (200), comprising:

   a first magnet system (1) comprising a first plurality of concentrically arranged circular-loop coils (11, 12), comprising:

a first coil (11) arranged to carry a current in a first direction; and
a second coil (12) arranged to carry a current in a second direction opposite to said first direction; and

a second magnet system (2) comprising a second plurality of concentrically arranged circular-loop coils (21, 22), arranged with mirror symmetry with respect to said first magnet system relative to a symmetry plane (P), said symmetry plane (P) being located between said first magnet system (1) and said second magnet system (2),
said first magnet system (1) and said second magnet system (2) being arranged as to create an annular plasma confinement area (206) at said symmetry plane (P) with a magnetic field normal to said symmetry plane (P) at said symmetry plane (P),
said magnetic mirror machine further comprising a tandem magnet system (4, 4'), comprising:

a first tandem coil (41) located longitudinally outside said first coil (11, 21) of one of said first magnet system (1) or said second magnet system (2) and arranged to carry a current in said second direction, and
a second tandem coil (42) located longitudinally outside said second coil (12, 22) of said one of said first magnet system (1) or said second magnet system (2) and arranged to carry a current in said first direction.

2. The magnetic mirror machine (200) of claim 1, wherein said tandem magnet system is a first tandem magnet system (4) and said magnetic mirror machine further comprises a second tandem magnet system (4') located adjacent to the other of said first magnet system (1) or said second magnet system (2) than said first tandem magnet system (4').

3. The magnetic mirror machine (200) of any one of claims 1-2, wherein said first plurality of concentrically arranged coils (11, 12) is identically designed to said second plurality of concentrically arranged coils (21, 22).

4. The magnetic mirror machine (200) of any one of claims 1-3, further comprising a third magnet system (3) arranged radially outside said plasma confinement area (206), said third magnet system (3) comprising at least one circular-loop coil (31, 32).

5. Use of the magnetic mirror machine (200) of any one of claims 1-4 for confining a plasma.

6. Use of the magnetic mirror machine (200) of any one of claims 1-4 in a fusion reactor.

7. A method of plasma confinement, comprising:

in a first magnet system (1) comprising a first plurality of concentrically arranged circular-loop coils (11, 12), a first coil (11) carrying a current in a first direction and a second coil (12) carrying a current in a second direction opposite to said first direction;
a second magnet system (2) comprising a second plurality of concentrically arranged circular-loop coils (21, 22) carrying currents with mirror symmetry with respect to said first magnet system (1) relative to a symmetry plane (P), said symmetry plane (P) being located between said first magnet system (1) and said second magnet system (2),
creating an annular plasma confinement area (206) at said symmetry plane (P) with a magnetic field normal to said symmetry plane (P),
a first tandem coil (41), located longitudinally outside said first coil (11, 21) of one of said first magnet system (1) or said second magnet system (2), carrying a current in said second direction, and
a second tandem coil (42), located longitudinally outside said second coil (12, 22) of said one of said first magnet system (1) or said second magnet system (2), carrying a current in said first direction.

Fig. 1

# EUROPEAN SEARCH REPORT

**Application Number**

EP 24 17 8121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/367069 A1 (JÄDERBERG JAN [SE]) 17 November 2022 (2022-11-17) * abstract; figures 1-8, 13 * * paragraphs [0078] - [0084] * * paragraphs [0104], [0118] - [0123] * ----- | 1-7 | INV. G21B1/05 G21B1/11 H05H1/14 |
| A | JAN J\"ADERBERG ET AL: "Introducing the Novatron, a novel reactor concept", ARXIV.ORG, CORNELL UNIVERSITY LIBRARY, 201 OLIN LIBRARY CORNELL UNIVERSITY ITHACA, NY 14853, 25 October 2023 (2023-10-25), XP091644292, * abstract; figures 1,3,4 * * sections 1.2, 1.3.3, 2.1 * ----- | 1-7 | |
| A | US 2015/187443 A1 (TUSZEWSKI MICHEL [US] ET AL) 2 July 2015 (2015-07-02) * abstract; figures 2,3 * * paragraphs [0045], [0070] * ----- | 1,7 | |

**TECHNICAL FIELDS SEARCHED (IPC)**

G21B
H05H

The present search report has been drawn up for all claims

| Place of search | Date of completion of the search | Examiner |
|---|---|---|
| Munich | 28 October 2024 | Manini, Adriano |

EPO FORM 1503 03.82 (P4C01)

## ANNEX TO THE EUROPEAN SEARCH REPORT
## ON EUROPEAN PATENT APPLICATION NO.

EP 24 17 8121

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2024

| Patent document cited in search report | Publication date | Patent family member(s) | Publication date |
|---|---|---|---|
| US 2022367069 A1 | 17-11-2022 | BR 112022008006 A2 | 12-07-2022 |
| | | CA 3160621 A1 | 20-05-2021 |
| | | CA 3180392 A1 | 19-05-2022 |
| | | CN 114667575 A | 24-06-2022 |
| | | CN 115867985 A | 28-03-2023 |
| | | EP 3819913 A1 | 12-05-2021 |
| | | EP 4059029 A1 | 21-09-2022 |
| | | EP 4244871 A1 | 20-09-2023 |
| | | JP 2023502173 A | 20-01-2023 |
| | | JP 2023547297 A | 10-11-2023 |
| | | KR 20220092897 A | 04-07-2022 |
| | | KR 20230011431 A | 20-01-2023 |
| | | US 2022367069 A1 | 17-11-2022 |
| | | US 2024013932 A1 | 11-01-2024 |
| | | WO 2021094372 A1 | 20-05-2021 |
| | | WO 2022101356 A1 | 19-05-2022 |
| US 2015187443 A1 | 02-07-2015 | AR 088865 A1 | 16-07-2014 |
| | | AU 2012340058 A1 | 05-06-2014 |
| | | AU 2016203851 A1 | 30-06-2016 |
| | | BR 112014011619 A2 | 02-05-2017 |
| | | CA 2855698 A1 | 23-05-2013 |
| | | CL 2014001188 A1 | 17-10-2014 |
| | | CL 2017001162 A1 | 12-01-2018 |
| | | CN 103918034 A | 09-07-2014 |
| | | CN 107068204 A | 18-08-2017 |
| | | CY 1119083 T1 | 10-01-2018 |
| | | CY 1121674 T1 | 31-07-2020 |
| | | DK 2780913 T3 | 10-07-2017 |
| | | DK 3223284 T3 | 20-05-2019 |
| | | EA 201490775 A1 | 30-09-2014 |
| | | EA 201790774 A1 | 30-11-2017 |
| | | EP 2780913 A2 | 24-09-2014 |
| | | EP 3223284 A1 | 27-09-2017 |
| | | ES 2632589 T3 | 14-09-2017 |
| | | ES 2731836 T3 | 19-11-2019 |
| | | HK 1201977 A1 | 11-09-2015 |
| | | HR P20171029 T1 | 06-10-2017 |
| | | HR P20190738 T1 | 28-06-2019 |
| | | HU E034343 T2 | 28-02-2018 |
| | | HU E043986 T2 | 30-09-2019 |
| | | IL 258792 A | 28-06-2018 |
| | | JP 6186367 B2 | 23-08-2017 |
| | | JP 6738109 B2 | 12-08-2020 |
| | | JP 2015502532 A | 22-01-2015 |
| | | JP 2017075969 A | 20-04-2017 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 17 8121

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2024

| Patent document cited in search report | Publication date | Patent family member(s) | Publication date |
|---|---|---|---|
| | | JP 2019215370 A | 19-12-2019 |
| | | KR 20140101781 A | 20-08-2014 |
| | | KR 20190127987 A | 13-11-2019 |
| | | LT 2780913 T | 26-06-2017 |
| | | LT 3223284 T | 10-05-2019 |
| | | MX 337413 B | 02-03-2016 |
| | | MX 351648 B | 23-10-2017 |
| | | MY 173320 A | 15-01-2020 |
| | | NZ 624928 A | 31-03-2016 |
| | | PE 20142027 A1 | 15-12-2014 |
| | | PH 12017500784 A1 | 28-01-2019 |
| | | PL 2780913 T3 | 31-10-2017 |
| | | PL 3223284 T3 | 29-11-2019 |
| | | PT 2780913 T | 06-07-2017 |
| | | PT 3223284 T | 30-05-2019 |
| | | SG 10201704299X A | 29-06-2017 |
| | | SG 11201402259Y A | 27-06-2014 |
| | | SI 2780913 T1 | 31-08-2017 |
| | | SI 3223284 T1 | 30-08-2019 |
| | | TW 201332401 A | 01-08-2013 |
| | | UA 119027 C2 | 25-04-2019 |
| | | US 2015187443 A1 | 02-07-2015 |
| | | US 2019139649 A1 | 09-05-2019 |
| | | WO 2013074666 A2 | 23-05-2013 |
| | | ZA 201403057 B | 23-12-2015 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2020081762 W

**Non-patent literature cited in the description**

- **ROSENBLUTH ; LONGMIRE**. Stability of plasmas confined by magnetic fields. *Annals of Physics*, 1957, vol. 1 (2), 120-140, https://doi.org/10.1016/0003-4916(57)90055-6

- **D UGLIETTI**. A review of commercial high temperature superconducting materials for large magnets: from wires and tapes to cables and conductors. *Supercond. Sci. Technol.*, 2019, vol. 32, 29, https://doi.org/10.1088/1361-6668/ab06a2